(19) Europäisches Patentamt
European Patent Office
Office européen des brevets

(11) EP 4 700 079 A1

(12) **EUROPEAN PATENT APPLICATION**
published in accordance with Art. 153(4) EPC

(43) Date of publication:
**25.02.2026 Bulletin 2026/09**

(21) Application number: **24819568.7**

(22) Date of filing: **05.06.2024**

(51) International Patent Classification (IPC):
***C08K 3/04*** (2006.01) ***C08L 65/00*** (2006.01)
***C08G 61/12*** (2006.01) ***H01M 4/66*** (2006.01)
***H01M 10/052*** (2010.01)

(52) Cooperative Patent Classification (CPC):
Y02E 60/10

(86) International application number:
**PCT/KR2024/007687**

(87) International publication number:
**WO 2024/253417 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.06.2023 KR 20230072489**

(71) Applicants:
- **LG Chem, Ltd.**
  **Seoul 07336 (KR)**
- **LG Energy Solution, Ltd.**
  **Seoul 07335 (KR)**

(72) Inventors:
- **SONG, In Taek**
  **Daejeon 34122 (KR)**
- **KANG, Joon Koo**
  **Daejeon 34122 (KR)**
- **KIM, Ki Hwan**
  **Daejeon 34122 (KR)**
- **PARK, Eun Kyoung**
  **Daejeon 34122 (KR)**
- **CHOI, Hyun Ju**
  **Daejeon 34122 (KR)**
- **KOH, Jong Kwan**
  **Daejeon 34122 (KR)**
- **YANG, Hee Myeong**
  **Daejeon 34122 (KR)**
- **LEE, Yu Mi**
  **Daejeon 34122 (KR)**
- **CHO, Woo Hyung**
  **Daejeon 34122 (KR)**
- **LEE, Seok Kyeong**
  **Daejeon 34122 (KR)**

(74) Representative: **Plasseraud IP**
**104 Rue de Richelieu**
**CS92104**
**75080 Paris Cedex 02 (FR)**

# (54) POLYMER COMPOSITION

(57) The present specification discloses a polymer composition. The polymer composition can form a polymer layer exhibiting a PTC (positive temperature coefficient) effect, and the PTC effect of the polymer layer can be very precisely controlled in response to a temperature and an external voltage. The polymer layer can very quickly exhibit at a necessary time a transition between a state exhibiting excellent electrical properties such as very low resistance and a state exhibiting insulator properties due to the increased resistance. Accordingly, the polymer layer is applied to various electronic/electric devices, so that in a normal state, it does not affect driving of the devices through excellent electrical properties, and in an abnormal state, it is possible to ensure stability through the rapid resistance increase. For example, the polymer layer is applied to a secondary battery to be converted into an insulator in an abnormal state, thereby suppressing additional current flow, whereby it is possible to secure excellent stability against risks caused by TR and TP, and the like. The present specification also discloses the polymer layer, and a current collector and a secondary battery, each comprising the same.

EP 4 700 079 A1

[Figure 2]

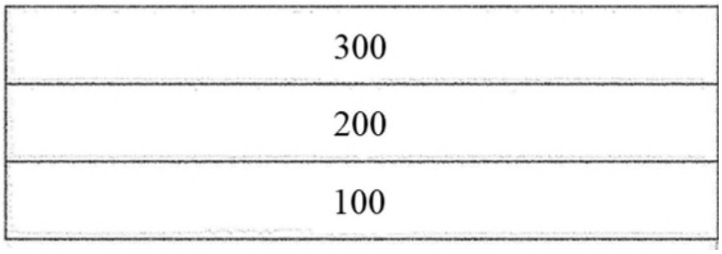

# Description

## Technical Field

This application claims the benefit of priority based on Korean Patent Application No. 10-2023-0072489 dated June 5, 2023, the disclosure of which is incorporated herein by reference in its entirety.
This specification discloses a polymer composition, a polymer layer, a current collector, and a secondary battery.

## Background Art

Conductive polymers are materials used in various fields.
Conductive polymers change their conductivity depending on doping and de-doping states. Such a characteristic can be applied, for example, to ensuring the stability of electronic/electric devices such as secondary batteries.
For example, application areas of secondary batteries such as lithium secondary batteries are expanded to various fields including electric vehicles (EVs) or renewable energy storage systems, and the like, in addition to portable electronics which have been traditionally applied, and accordingly, many efforts are made to improve storage capacity and output.
However, along with the capacity and output improvement of electronic/electric devices such as secondary batteries, issues regarding stability and potential hazardous properties also increase. For example, although fire resistance of electric vehicles is about 60 times lower than that of vehicles with internal combustion engines, it has serious risks of TR (thermal runaway) and TP (thermal propagation), which cause uncontrolled temperature increase and hazardous chemical leakage, and the like.
To prevent these risks, commercialized electric vehicles are equipped with various external safety mechanisms (pressure-limited valves, cell-to-cell fire extinguishers, or high thermal insulating materials, etc.), but these safety mechanisms still do not effectively respond to TR and TP, or show very slow response speeds.

## Disclosure

## Technical Problem

The present specification discloses a polymer composition. The polymer composition can form a polymer layer exhibiting a PTC (positive temperature coefficient) effect, and the PTC effect of the polymer layer can be very precisely controlled in response to a temperature and an external voltage. The polymer layer can very quickly exhibit at a necessary time a transition between a state exhibiting excellent electrical properties such as very low resistance and a state exhibiting insulator properties due to the increased resistance.
Accordingly, the polymer layer is applied to various electronic/electric devices, so that in a normal state, it does not affect driving of the devices through excellent electrical properties, and in an abnormal state, it is possible to ensure stability through the rapid resistance increase.
For example, the polymer layer is applied to a secondary battery to be converted into an insulator in an abnormal state, thereby suppressing additional current flow, whereby it is possible to secure excellent stability against risks caused by TR and TP, and the like.
The present specification also discloses the polymer layer, and a current collector and a secondary battery, each comprising the same.

## Technical Solution

Definitions of terms

The term room temperature may mean a natural temperature without warming or cooling, and for example, the room temperature may be any one temperature within a range of about 10°C to 30°C, or a temperature of about 23°C or about 25°C, or about 27°C or so.
Among physical properties mentioned in this specification, the physical property affected by the measurement temperature is a physical property measured at room temperature, unless otherwise specified.
The unit of temperature mentioned in this specification is Celsius (°C), unless otherwise specified.
The term normal pressure may mean a natural pressure without pressurization or depressurization, which may usually mean a pressure of about 730 mmHg to 790 mmHg or so.
Among physical properties mentioned in this specification, the physical property affected by the measurement pressure is a physical property measured at normal pressure, unless otherwise specified.

Among physical properties mentioned in this specification, the physical property affected by the measurement humidity is a physical property measured at standard-state humidity, unless otherwise specified.

The standard-state humidity means any one relative humidity within a range of 40% to 60% in terms of relative humidity, and for example, means a relative humidity of about 55% or about 60% or so.

The term alkylene group means a divalent functional group formed by removing hydrogen atoms from two different carbon atoms of an alkane, respectively.

The term alkylidene group means a divalent functional group formed by removing two hydrogen atoms from one carbon atom of an alkane.

In this specification, the term alkylene group may be an alkylene group with 2 to 20 carbon atoms, 2 to 16 carbon atoms, 2 to 12 carbon atoms, 2 to 8 carbon atoms or 2 to 4 carbon atoms, unless otherwise specified. The alkylene group may be linear or branched, or cyclic, and may be optionally substituted with one or more substituents.

In this specification, the term alkylidene group may be an alkylidene group with 1 to 20 carbon atoms, 1 to 16 carbon atoms, 1 to 12 carbon atoms, 1 to 8 carbon atoms, or 1 to 4 carbon atoms, unless otherwise specified. The alkylidene group may be linear or branched, or cyclic, and may be optionally substituted with one or more substituents.

The term normal state means a normal operation, storage, or maintenance state of electric/electronic devices. For example, the normal state of a secondary battery means a normal charging or discharging state, or a storage, maintenance, or standby state of the secondary battery.

The term abnormal state means a state in which abnormal flames, heat generation, or explosion occurs in electric/electronic devices, or a risk of occurrence of the abnormal flames, heat generation, or explosion has occurred. For example, in the case of a secondary battery, a state in which an internal short-circuit occurs due to an external impact or a rise in temperature, a state in which TR (thermal runaway) and/or TP (thermal propagation) occurs, or a state in which there is a risk of occurrence of the internal short-circuit, TR, and/or TP may be the abnormal state.

The term conductive polymer means a polymer exhibiting conductivity by a conjugated system of a polymer chain and/or doping, and the like, as known. For example, if a polymer exhibits a resistance $R_{25}$ of AC impedance in the range as described below in this specification, the relevant polymer may be a conductive polymer.

The term PTC (positive temperature coefficient) polymer means a polymer exhibiting a change in conductivity according to a change in temperature and/or applied voltage. For example, if a polymer exhibits a Q value of Equation 1 in the range as described below in this specification, the relevant polymer may be a PTC polymer.

The term conductive PTC polymer or PTC conductive polymer means a polymer which is the PTC polymer while being the conductive polymer.

Hereinafter, a polymer composition as described in this specification, and the like will be explained.

The present specification discloses a polymer composition.

The term composition means a mixture of at least two or more different components.

The polymer composition may comprise a polymer as at least one component of the at least two or more different components.

The polymer composition may comprise, for example, the conductive PTC polymer and a conductive material. The conductive material is a material having conductivity, which may be a material rather than the conductive polymer.

The polymer composition may exhibit fast and excellent electrical reactivity, or may form a polymer layer exhibiting fast and excellent electrical reactivity. The term polymer layer means a layer including a polymer.

For example, the polymer composition may exhibit characteristics in which Q in Equation 1 below is in a predetermined range.

[Equation 1]

$$Q = R_1/R_2$$

In Equation 1, $R_1$ is an AC impedance resistance as measured after a voltage of 3V is applied at room temperature (about 25°C) for 10 minutes, and $R_2$ is an AC impedance resistance at the time point when one second has elapsed after a voltage of 3V is applied at room temperature (about 25°C) and then the voltage is converted to 3.3V.

$R_1$ and $R_2$ above have the same unit.

The AC impedance resistances $R_1$ and $R_2$ may be AC impedance resistances for the polymer composition or the polymer layer formed by the polymer composition.

For example, the AC impedance resistances $R_1$ and $R_2$ in Equation 1 may be measured by the method described in the "4. Reactivity measurement" section of this specification.

It means that as the Q value of Equation 1 is large, the electrical reaction of the polymer composition or polymer layer (e.g., de-doping or doping of the conductive PTC polymer) occurs rapidly under a controlled voltage. For example, the matter that the Q value is large means that the de-doping state of the conductive polymer in the polymer composition or the polymer layer is maintained at a voltage of 3.3V or less, thereby exhibiting a high resistance, but the doping is rapidly

induced from the moment the voltage exceeds 3.3V, thereby exhibiting resistance decrease.

The control of Q above means that the PTC effect of the polymer layer can be controlled depending on the change of not only temperatures but also external electrical environments.

The lower limit of the Q value in Equation 1 of the polymer composition or polymer layer may be 5, 6, 7, 8, 9, 10, 20, 30, 40, 50, 60, 70, 80, 85, 88, 90, 100, 110, 120, 130, or 133 or so, and the upper limit thereof may be 500, 400, 350, 300, 250, 200, 190, 180, 170, 160, 150, 140, 138, 136, 134, 130, 120, 110, 100, 90, 80, 70, 60, 50, 40, 30, 20, or 10 or so. The Q value in Equation 1 may be within a range of more than or equal to, or more than any of the above-described lower limits; or within a range of less than or equal to, or less than any of the above-described upper limits while being more than or equal to, or more than any of the above-described lower limits.

It means that as the lower limit of the Q value in Equation 1 is a lower limit closer to the range of an example among the above-described ranges, the polymer composition or polymer layer exhibits rapidly the change in electrical characteristics with respect to the change in external electrical environments.

$R_2$ in Equation 1 above may be within a predetermined range. For example, the upper limit of $R_2$ above may be 10,000, 7,000, 5,000, 4,500, 4,000, 3,500, 3,000, 2,500, 2,000, 1,500, 1,000, 900, 800, 700, 600, 500, 400, or 350 or so, and the lower limit thereof may be, for example, 10, 15, 20, 25, 30, 35, 40, 45, 50, 55, 60, 65, 70, 75, 80, 85, 90, 95, 100, 150, 200, 250, 300, 500, 1,000, 1,500, 2,000, 2,500, 3,000, 3,500, 4,000, 4,500, or 5,000 or so. The $R_2$ may be within a range of less than or equal to, or less than any of the above-described upper limits; or within a range of less than or equal to, or less than any of the above-described upper limits while being more than or equal to, or more than any of the above-described lower limits. It means that the lower the value of the $R_2$, the more effectively the doping by the voltage change has been performed, and the desired effect can be more efficiently obtained at an upper limit close to the range of an example among the above-listed upper limits. The unit of the $R_2$ is $\Omega$.

For example, the polymer composition may exhibit characteristics in which R of Equation 2 below is within a predetermined range.

[Equation 2]

$$R = R_{130}/R_{25}$$

In Equation 2, $R_{25}$ is an AC impedance resistance at room temperature (about 25°C), and $R_{130}$ is an AC impedance resistance at about 130°C.

The $R_{25}$ and $R_{130}$ have the same unit.

The AC impedance resistances $R_{130}$ and $R_{25}$ may be AC impedance resistances for the polymer composition, or the polymer layer formed by the polymer composition.

For example, the AC impedance resistances $R_{25}$ and $R_{130}$ in Equation 2 may be measured by the method described in the "5. AC impedance resistance measurement" section of this specification.

The lower limit of R in Equation 2 may be 20, 22, 24, 26, 28, 30, 40, 50, 100, 200, 300, 400, 500, 600, 700, 800, 900, 1,000, or 1, 100 or so, and the upper limit thereof may be, for example, 10,000, 9,000, 8,000, 7,000, 6,000, 5,000, 4,000, 3,000, 2,000, 1,500, 1,200, 1,000, 900, 800, 700, or 650 or so. The R may be within a range of more than or equal to, or more than any of the above-described lower limits; or within a range of more than or equal to, or more than any of the above-described lower limits while being less than or equal to, or less than any of the above-described upper limits.

It means that as the lower limit of the R value in Equation 2 is closer to the range of an example among the above-described ranges, the polymer composition or polymer layer exhibits a quantitatively better PTC effect.

In various electric/electronic devices, the polymer composition or polymer layer exhibiting the Q and/or R as described above can quickly secure stability in an abnormal state while doing not hinder or rather improving the operation of the device in a normal state.

The upper limit of the AC impedance resistance $R_{25}$ in Equation 2 may be 500, 450, 400, 350, 300, 250, 200, 150, 100, 90, 80, 70, 60, 50, 45, 40, 35, or 30 or so, and the lower limit thereof may be, for example, 10, 15, 20, 25, 30, 35, 40, 45, or 50 or so. The $R_{25}$ may be within a range of less than or equal to, or less than any of the above-described upper limits; or within a range of more than or equal to, or more than any of the above-described lower limits while being less than or equal to, or less than any of the above-described upper limits.

The lower limit of the AC impedance resistance $R_{130}$ in Equation 2 may be 10,000, 11,000, 12,000, 13,000, 14,000, 15,000, 16,000, 17,000, 18,000, 19,000, 20,000, 21,000, 22,000, 23,000, 24,000, 25,000, 26,000, 27,000, 28,000, 29,000, or 30,000 or so, and the upper limit thereof may be 100,000, 90,000, 80,000, 70,000, 60,000, 50,000, 40,000, 39,000, 38,000, 37,000, 36,000, or 35,000 or so. The $R_{130}$ may be within a range of more than or equal to, or more than any of the above-described lower limits; or within a range of more than or equal to, or more than any of the above-described lower limits while being less than or equal to, or less than any of the above-described upper limits.

The units of the AC impedance resistances $R_{25}$ and $R_{130}$ are $\Omega$.

The polymer composition may be controlled for securing the above effect.

For example, an oxidation potential of the conductive PTC polymer, the polymer composition, or the polymer layer may be adjusted. For example, the lower limit of the oxidation potential may be 0V, 0.1V, 0.2V, 0.3V, 0.4V, 0.5V, 0.6V, 0.7V, 0.8V, 0.9V, 1.0V, 1.1V, 1.2V, 1.3V, 1.4V, 1.5V, 1.6V, 1.7V, 1.8V, 1.9V, 2.0V, 2.1V, 2.2V, 2.3V, 2.4V, 2.5V, 2.6V, 2.7V, 2.8V, 2.9V, 3V, 3.1V, 3.2V, or 3.3V or so, and the upper limit thereof may be 4V, 3.5V, 3.45V, 3.4V, 3.35V, or 3.3V or so. The oxidation potential may be within a range of less than or equal to, or less than any of the above-described upper limits; or within a range of more than or equal to, or more than any of the above-described lower limits; or within a range of more than or equal to, or more than any of the above-described lower limits while being less than or equal to, or less than any of the above-described upper limits. The oxidation potential is an oxidation potential relative to lithium, which is measured based on lithium and lithium ions ($Li/Li^+$). The method of measuring the oxidation potential is described in "6. Oxidation potential measurement method" of Example sections of this specification.

The conductive PTC polymer may have a weight average molecular weight within a predetermined range. The lower limit of the weight average molecular weight of the conductive PTC polymer may be 10,000, 15,000, 20,000, 25,000, 30,000, 35,000, 40,000, 45,000, 50,000, 55,000, 60,000, 65,000, 70,000, 75,000, 80,000, 85,000, 90,000, 95,000, 97,000, or 99,000 or so, and the upper limit thereof may be 1,000,000, 950,000, 900,000, 850,000, 800,000, 750,000, 700,000, 650,000, 600,000, 550,000, 500,000, 450,000, 400,000, 350,000, 300,000, 250,000, 200,000, 150,000, or 100,000 or so. The weight average molecular weight may be within a range of less than or equal to, or less than any of the above-described upper limits; or within a range of more than or equal to, or more than any of the above-described lower limits; or within a range of more than or equal to, or more than any of the above-described lower limits while being less than or equal to, or less than any of the above-described upper limits. By using the conductive PTC polymer having the weight average molecular weight, it is possible to effectively form a polymer layer, an electrode current collector and an electrode having desired properties.

The weight average molecular weight of the conductive PTC polymer may be measured by the method described in "2. GPC (Gel Permeation Chromatograph)" of Example sections of this specification, and the unit thereof is g/mol.

A molecular weight distribution of the conductive PTC polymer may be within a predetermined range. The lower limit of the molecular weight distribution may be 1, 1.5, 2, 2.5, 3, or 3.5 or so, and the upper limit thereof may be 8, 7.5, 7, 6.5, 6, 5.5, 5, 4.5, or 4 or so. The molecular weight distribution may be within a range of less than or equal to, or less than any of the above-described upper limits; or within a range of more than or equal to, or more than any of the above-described lower limits; or within a range of more than or equal to, or more than any of the above-described lower limits while being less than or equal to, or less than any of the above-described upper limits. By using the conductive PTC polymer having the molecular weight distribution as above, it is possible to effectively form a polymer layer, an electrode current collector, and an electrode having desired properties.

The molecular weight distribution is a ratio Mw/Mn of the weight average molecular weight Mw to a number average molecular weight Mn of the conductive PTC polymer. The method of measuring the weight average molecular weight and the number average molecular weight is described in "2. GPC (Gel Permeation Chromatograph)" of Example sections of this specification, and each unit is g/mol.

The conductive PTC polymer may be a thiophene polymer.

The term thiophene polymer means a polymer containing a certain amount or more of thiophene units as a monomer unit.

The term monomer unit means a state where a certain monomer is polymerized and included in a polymer, and in this specification, the monomer unit may be simply referred to as a unit.

The term thiophene unit means a monomer unit formed by polymerization of a thiophene-based compound (a compound including a thiophene structure) as a monomer.

For example, the lower limit of the ratio of the mole number of the thiophene unit based on the sum of the mole numbers of all the monomer units of the thiophene polymer may be 50 mol%, 55 mol%, 60 mol%, 65 mol%, 70 mol%, 75 mol%, or 80 mol% or so, and the upper limit thereof may be 100 mol%, 95 mol%, 90 mol%, 85 mol%, or 80 mol% or so. The ratio may be within a range of more than or equal to, or more than any of the above-described lower limits; or within a range of more than or equal to, or more than any of the above-described lower limits while being less than or equal to, or less than any of the above-described upper limits.

To more effectively secure desired properties, a polymer including a unit (monomer unit) having a long-chain hydrocarbon group may be applied as the conductive PTC polymer. The unit (monomer unit) having the long-chain hydrocarbon group may be the thiophene unit.

The term hydrocarbon group means a functional group composed of carbon and hydrogen, or the functional group substituted with an optional substituent, where an example thereof includes an alkyl group, an alkenyl group or an alkynyl group, and an example of a suitable hydrocarbon group in the long-chain hydrocarbon group is an alkyl group.

The long-chain hydrocarbon group is a hydrocarbon group with a carbon number in a certain level or more. For example, the lower limit of the carbon number of the long-chain hydrocarbon group may be 10, 11, or 12 or so, and the upper limit thereof may be 20, 19, 18, 17, 16, 15, 14, 13, or 12 or so. The carbon number of the long-chain hydrocarbon group may be within a range of more than or equal to, or more than any of the above-described lower limits; or within a range

of more than or equal to, or more than any of the above-described lower limits while being less than or equal to, or less than any of the above-described upper limits. As the lower limit or upper limit of the carbon number in the long-chain hydrocarbon group is a lower limit or upper limit close to the carbon number (12) in an example described herein among the above-listed lower limits or upper limits, the more effectively the desired effect can occur. For example, an alkyl group, an alkenyl group, or an alkynyl group, which is the long-chain hydrocarbon group, may have a carbon number within the above range. Such a long-chain hydrocarbon group may be optionally substituted with one or more substituents. This long-chain hydrocarbon group may be linear or branched, and in an appropriate example, it may be linear.

The hydrocarbon group is a functional group capable of imparting appropriate mobility to the polymerization process of the conductive PTC polymer or to the conductive PTC polymer itself. The monomer forming the unit including such a hydrocarbon group imparts appropriate mobility to a monomer mixture and diffuses within the monomer mixture as well, thereby allowing polymerization to occur in an excellent efficiency. In addition, the conductive PTC polymer having the hydrocarbon group can enable a polymer layer to be stably and uniformly formed on the current collector body through appropriate mobility.

Such a long-chain hydrocarbon group exhibits enhanced vibration energy at an increased temperature, whereby it is possible to control a de-doping efficiency of the conductive PTC polymer, and thus, an onset temperature of the de-doping of the conductive PTC polymer can be controlled through the content of the long-chain hydrocarbon group or the combination of a short-chain hydrocarbon group to be described below.

For controlling the onset temperature, and the like, the ratio of the mole number of the unit having the long-chain hydrocarbon group with 10 or more carbon atoms based on the mole number of all the units (monomer units) included in the conductive PTC polymer may be adjusted. For example, the lower limit of the ratio may be 20 mol%, 25 mol%, 30 mol%, 35 mol%, 40 mol%, or 45 mol% or so, and the upper limit thereof may be 80 mol%, 75 mol%, 70 mol%, 65 mol%, 60 mol%, 55 mol%, or 50 mol% or so. The ratio may be within a range of more than or equal to, or more than any of the above-described lower limits; or within a range of less than or equal to, or less than any of the above-described upper limits; or within a range of more than or equal to, or more than any of the above-described lower limits while being less than or equal to, or less than any of the above-described upper limits. As the lower limit or upper limit of the ratio is a lower limit or upper limit close to the relevant ratio in an example described herein among the above-listed lower limits or upper limits, the more effectively the desired effect can occur.

For example, the unit having the long-chain hydrocarbon group may be a thiophene unit represented by Formula 1 below.

[Formula 1]

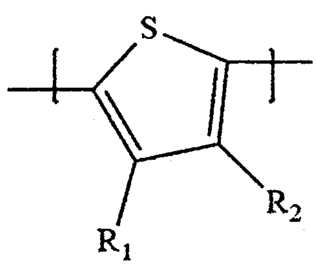

In Formula 1, $R_1$ and $R_2$ may each independently be hydrogen or the long-chain hydrocarbon group. In this case, at least one of the $R_1$ and $R_2$ may be the long-chain hydrocarbon group. In a suitable example, any one of the $R_1$ and $R_2$ may be the long-chain hydrocarbon group, and the other may be hydrogen.

In another example, the $R_1$ and $R_2$ may be connected to each other to form a divalent functional group of Formula 2 below.

[Formula 2]

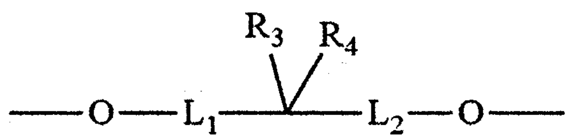

In Formula 2, $L_1$ and $L_2$ may each independently be a single bond, an alkylene group, or an alkylidene group, and $R_3$ and $R_4$ may each independently be hydrogen or the long-chain hydrocarbon group.

In this case, at least one or any one of the $R_3$ and $R_4$ may be the long-chain hydrocarbon group.

Here, the specific types of the alkylene group and the alkylidene group are as explained in the definition section of the terminology of this specification.

In addition, the specific contents of the long-chain hydrocarbon group are as described above.

The conductive PTC polymer may further comprise a unit (monomer unit) having a short-chain hydrocarbon group.

The short-chain hydrocarbon group is a hydrocarbon group with a carbon number in a certain level or more. For example, the lower limit of the carbon number of the short-chain hydrocarbon group may be 3, 4, 5, or 6 or so, and the upper limit thereof may be 9, 8, 7, or 6 or so. The carbon number of the short-chain hydrocarbon group may be within a range of less than or equal to, or less than any of the above-described upper limits; or within a range of more than or equal to, or more than any of the above-described lower limits while being less than or equal to, or less than any of the above-described upper limits. As the lower limit or upper limit of the carbon number in the short-chain hydrocarbon group is a lower limit or upper limit close to the carbon number (6) in an example described herein among the above-listed lower limits or upper limits, the more effectively the desired effect can occur. For example, an alkyl group, an alkenyl group, or an alkynyl group, which is the short-chain hydrocarbon group, may have a carbon number within the above range. Such a short-chain hydrocarbon group may be optionally substituted with one or more substituents. This short-chain hydrocarbon group may be linear or branched, and in an appropriate example, it may be linear.

Such a short-chain hydrocarbon group dilutes the effect due to the vibration energy exhibited by the long-chain hydrocarbon group at a predetermined temperature. Therefore, the long-chain hydrocarbon group has the effect of lowering the onset point of the PTC effect, whereas the short-chain hydrocarbon group has the effect of diluting the long-chain hydrocarbon group as described above.

Therefore, it is possible to control the properties of the conductive PTC polymer by combining the long-chain and short-chain hydrocarbon groups and controlling their ratio.

The mole number of the unit having the short-chain hydrocarbon group per 100 moles of the unit having the long-chain hydrocarbon group in the conductive PTC polymer may be adjusted. For example, the lower limit of the mole number of the unit having the short-chain hydrocarbon group per 100 moles of the unit having the long-chain hydrocarbon group may be 1 mole, 5 moles, 10 moles, 15 moles, 20 moles, 25 moles, 30 moles, 35 moles, 40 moles, 45 moles, or 50 moles or so, and the upper limit thereof may be 100 moles, 95 moles, 90 moles, 85 moles, 80 moles, 75 moles, 70 moles, 65 moles, 60 moles, 55 moles, or 50 moles or so. The numerical value may be within a range of more than or equal to, or more than any of the above-described lower limits; or within a range of less than or equal to, or less than any of the above-described upper limits; or within a range of more than or equal to, or more than any of the above-described lower limits while being less than or equal to, or less than any of the above-described upper limits. As the upper limit or lower limit of the numerical value is an upper limit or lower limit close to the relevant numerical value in an example described herein among the above-listed upper limits or lower limits, the more effectively the desired effect can occur.

The unit having the short-chain hydrocarbon group may be, for example, a thiophene unit represented by Formula 3 below.

[Formula 3]

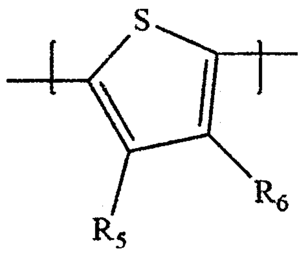

In Formula 3, $R_5$ and $R_6$ may each independently be hydrogen or the short-chain hydrocarbon group, and in this case, at least one of $R_5$ and $R_6$ may be the short-chain hydrocarbon group. In a suitable example, any one of $R_5$ and $R_6$ may be the short-chain hydrocarbon group, and the other may be hydrogen.

In another example, $R_5$ and $R_6$ may be linked to each other to form a divalent functional group of Formula 4 below.

[Formula 4]

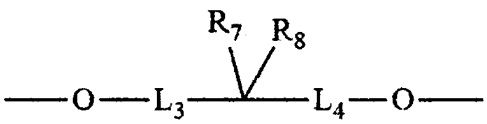

In Formula 4, $L_3$ and $L_4$ may each independently be a single bond, an alkylene group, or an alkylidene group, and $R_7$ and $R_8$ may each independently be hydrogen or the short-chain hydrocarbon group. In this case, at least one or any one of $R_7$ and $R_8$ is the short-chain hydrocarbon group.

In this specification, the term single bond means that the relevant part does not exist, and this is equally applied in this specification. For example, if $L_3$ is a single bond, a structure, in which the oxygen atom on the left side of $L_3$ and the carbon atom on the right side are directly linked, is derived.

The specific contents of the short-chain hydrocarbon group are as described above, and the specific contents of the alkylene group and the alkylidene group are as described in the definitions of terms at the beginning of this specification.

When the unit having the long-chain hydrocarbon group is referred to as a first unit and the unit having the short-chain hydrocarbon group is referred to as a second unit, in the conductive PTC polymer, the lower limit of the ratio of the total mole number of the first and second units based on the mole number of all the units of the conductive PTC polymer may be 50 mol%, 55 mol%, 60 mol%, 62 mol%, 64 mol%, 66 mol%, 68 mol%, 70 mol%, or 72 mol% or so, and the upper limit thereof may be 99 mol%, 97 mol%, 95 mol%, 93 mol%, 91 mol%, 89 mol%, 87 mol%, 85 mol%, 83 mol%, 81 mol%, 79 mol%, 77 mol%, 75 mol%, or 73 mol% or so. The ratio may be within a range of less than or equal to, or less than any of the above-described upper limits; or within a range of more than or equal to, or more than any of the above-described lower limits; or within a range of more than or equal to, or more than any of the above-described lower limits while being less than or equal to, or less than any of the above-described upper limits. As the upper limit or lower limit of the numerical value is an upper limit or lower limit close to the relevant numerical value in an example described herein among the above-listed upper limits or lower limits, the more effectively the desired effect can occur.

The lower limit of the ratio (M2/M1) of the mole number (M2) of the second unit to the mole number (M1) of the first unit in the conductive PTC polymer may be 0.01, 0.05, 0.1, 0.15, 0.2, 0.25, 0.3, 0.35, 0.4, 0.45, or 0.5 or so, and the upper limit thereof may be 100, 95, 90, 85, 80, 75, 70, 65, 60, 55, 50, 45, 40, 35, 30, 25, 20, 15, 10, 9, 8, 7, 6, 5, 4, 3, 2, 1, or 0.7 or so. The ratio may be within a range of less than or equal to, or less than any of the above-described upper limits; or within a range of more than or equal to, or more than any of the above-described lower limits; or within a range of more than or equal to, or more than any of the above-described lower limits while being less than or equal to, or less than any of the above-described upper limits. As the upper limit or lower limit of the numerical value is an upper limit or lower limit close to the relevant numerical value in an example described herein among the above-listed upper limits or lower limits, the more effectively the desired effect can occur.

Under such a ratio, the conductive PTC polymer or the polymer layer may exhibit an appropriate PTC (positive temperature coefficient) effect, and its surface characteristics may be appropriately adjusted.

The conductive PTC polymer may further comprise a unit having a polar functional group. The term polar functional group means a functional group including a polar atom, for example, oxygen or nitrogen. An example of such a polar functional group includes, as a polar functional group, a carboxyl group, a hydroxyl group, an amino group, a cyano group, a nitro group, an ether group, or a functional group of Formula 5 below.

An example of a suitable polar functional group may be a functional group of Formula 5 below.

[Formula 5]

$$-L_7-O-\left[L_8-O\right]_n-R_{13}$$

In Formula 5, $L_7$ may be a single bond, an alkylene group, or an alkylidene group. Here, the specific type of the alkylene group or alkylidene group is as described in the definitions of terms as described above. In a suitable example, $L_7$ may be a single bond. In this instance, the meaning of a single bond means a case where $L_7$ does not exist, and thus, in this case, the oxygen atom between $L_7$ and $L_8$ may be linked to the unit.

In Formula 5, $L_8$ may be an alkylene group or an alkylidene group. The specific type of the alkylene group or alkylidene group is as described in the definitions of terms as described above. In addition, as the carbon number of the alkylene group or alkylidene group is a linear or branched structure close to the relevant carbon number (2) presented in an example, the more appropriately the desired effect can be implemented.

In Formula 5, $R_{13}$ may be hydrogen or an alkyl group.

In one example, the alkyl group of $R_{13}$ in Formula 5 may be an alkyl group with 1 to 20 carbon atoms, 1 to 16 carbon atoms, 1 to 12 carbon atoms, 1 to 8 carbon atoms, or 1 to 4 carbon atoms, or may be a methyl group or an ethyl group. The alkyl group may be linear, branched, or cyclic, and may appropriately be linear or branched.

In Formula 5, the lower limit of n may be 1, 2, 3, or 4 or so, and the upper limit thereof may be 10, 9, 8, 7, 6, 5, 4, or 3 or so. The n may be less than or equal to, or less than any of the above-described upper limits, or may be more than or equal

to, or more than any of the above-described lower limits, or may also have a range of more than or equal to, or more than any of the above-described lower limits while being less than or equal to, or less than any of the above-described upper limits. As the upper limit or lower limit of the n is an upper limit or lower limit close to the relevant numerical value (3) in an example described herein among the above-listed upper limits or lower limits, the more effectively the desired effect can occur.

Through application of the polar functional group, the polymer layer including the conductive PTC polymer may be bonded to another layer to have an appropriate bonding force, and it is possible to efficiently achieve the desired function by forming the layer of the conductive PTC polymer uniformly. In addition, the polar functional group may additionally affect the onset temperature of the PTC adjusted by the first and second units.

For example, the mole number of the unit having the polar functional group per 100 moles of the unit having the long-chain hydrocarbon group in the conductive PTC polymer may be adjusted. For example, the lower limit of the mole number of the unit having the polar functional group per 100 moles of the unit having the long-chain hydrocarbon group may be 0.01 moles, 0.05 moles, 1 mole, 5 moles, 10 moles, or 15 moles or so, and the upper limit thereof may be 60 moles, 55 moles, 50 moles, 45 moles, 40 moles, 35 moles, 30 moles, 25 moles, 20 moles, or 18 moles or so. The numerical value may be within a range of more than or equal to, or more than any of the above-described lower limits; or within a range of less than or equal to, or less than any of the above-described upper limits; or within a range of more than or equal to, or more than any of the above-described lower limits while being less than or equal to, or less than any of the above-described upper limits. As the upper limit or lower limit of the numerical value is an upper limit or lower limit close to the relevant upper limit or lower limit in an example described herein among the above-listed upper limits or lower limits, the more effectively the desired effect can occur.

For example, the unit having the polar functional group may be represented by Formula 6 below.

[Formula 6]

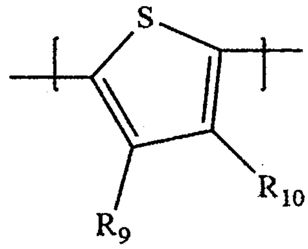

In Formula 6, $R_9$ and $R_{10}$ may each independently be hydrogen or the polar functional group. In this case, at least one of the $R_9$ and $R_{10}$ may be the polar functional group, and in an appropriate example, any one of the $R_9$ and $R_{10}$ may be the polar functional group, and the other may be hydrogen.

In another example, $R_9$ and $R_{10}$ of Formula 6 above may be linked to each other to form a divalent functional group of Formula 7 below.

[Formula 7]

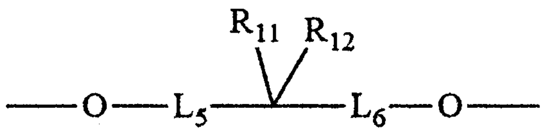

In Formula 7, $L_5$ and $L_6$ may each independently be a single bond, an alkylene group, or an alkylidene group. In Formula 7, $R_{11}$ and $R_{12}$ may each independently be hydrogen or a polar functional group, where at least one or any one of $R_{11}$ and $R_{12}$ may be the polar functional group.

The specific contents of the polar functional group are as described above, and the specific contents of the alkylene group or alkylidene group are as described in the definitions of terms at the beginning of this specification.

When the unit having the polar functional group is called a third unit, the third unit may exist so that the total mole number of the first and second units is within a predetermined range per 1 mole of the third unit.

For example, the lower limit of the ratio (i.e., M/M3) of the total mole number (M) of the first and second units per 1 mole of the third thiophene unit (M3) may be 1 mole, 2 moles, 3 moles, 4 moles, 5 moles, 6 moles, 8 moles, 8.5 moles, or 9 moles or so, and the upper limit thereof may be 500 moles, 450 moles, 400 moles, 350 moles, 300 moles, 250 moles, 200 moles, 150 moles, 100 moles, 95 moles, 90 moles, 85 moles, 80 moles, 75 moles, 70 moles, 65 moles, 60 moles, 55 moles, 50 moles, 45 moles, 40 moles, 35 moles, 30 moles, 25 moles, 20 moles, 15 moles, or 10 moles. The ratio may be within a

range of less than or equal to, or less than any of the above-described upper limits; or within a range of more than or equal to, or more than any of the above-described lower limits; or within a range of more than or equal to, or more than any of the above-described lower limits while being less than or equal to, or less than any of the above-described upper limits. As the upper limit or lower limit of the numerical value is an upper limit or lower limit close to the relevant numerical value in an example described herein among the above-listed upper limits or lower limits, the more effectively the desired effect can occur.

When the first to third units are present in the conductive PTC polymer, the lower limit of the ratio of the total mole number of the first to third units in the conductive PTC polymer may be 50 mol%, 55 mol%, 60 mol%, 65 mol%, 70 mol%, 75 mol%, or 80 mol% or so based on the total mole number of all units, and the upper limit thereof may be 100 mol%, 95 mol%, 90 mol%, 85 mol%, or 83 mol% or so. The ratio may be within a range of less than or equal to, or less than any of the above-described upper limits; or within a range of more than or equal to, or more than any of the above-described lower limits; or within a range of more than or equal to, or more than any of the above-described lower limits while being less than or equal to, or less than any of the above-described upper limits. As the upper limit or lower limit of the numerical value is an upper limit or lower limit close to the relevant numerical value in an example described in this specification among the above-listed upper limits or lower limits, the more effectively the desired effect can occur.

An additional unit (monomer unit) may be included for adjustment of the characteristics, such as oxidation potential, of the conductive PTC polymer. For example, the polymer may comprise a unit including a pyrrole structure, and such a unit may perform a function of lowering the oxidation potential exhibited by the thiophene unit.

For example, the conductive PTC polymer may include a unit of Formula 8 below.

[Formula 8]

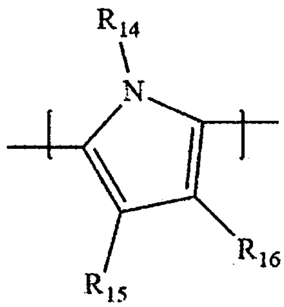

In Formula 8, $R_{14}$, $R_{15}$, and $R_{16}$ may each independently be hydrogen, a polar functional group, or a hydrocarbon group.

Here, the specific type of the polar functional group is as described for the third unit, and the specific type of the hydrocarbon group may be determined according to the contents described for the long-chain hydrocarbon group of the first unit or the contents described for the short-chain hydrocarbon group of the second unit.

In an appropriate example, the unit of the Formula 8 may be a pyrrole unit.

In the conductive PTC polymer, the ratio of the unit of Formula 8 above may be determined in consideration of the desired oxidation potential, and the like. For example, the lower limit of the ratio may be 1 mol%, 3 mol%, 5 mol%, 7 mol%, 9 mol%, 11 mol%, 13 mol%, 15 mol%, 17 mol%, or 19 mol% or so, and the upper limit thereof may be 95 mol%, 90 mol%, 85 mol%, 80 mol%, 75 mol%, 70 mol%, 65 mol%, 60 mol%, 55 mol%, 50 mol%, 45 mol%, 40 mol%, 35 mol%, 30 mol%, 25 mol%, or 20 mol% or so. The ratio is based on the total mole number of all units (monomer units) included in the conductive PTC polymer. The ratio may be within a range of less than or equal to, or less than any of the above-described upper limits; or within a range of more than or equal to, or more than any of the above-described lower limits; or may also have a range of more than or equal to, or more than any of the above-described lower limits while being less than or equal to, or less than any of the above-described upper limits. As the upper limit or lower limit of the numerical value is an upper limit or lower limit close to the relevant numerical value in an example described herein among the above-listed upper limits or lower limits, the more effectively the desired effect can occur.

In another example, the lower limit of the mole number of the unit of Formula 8 above per 100 moles of the unit having the long-chain hydrocarbon group in the conductive PTC polymer may be 1 mole, 5 moles, 10 moles, 15 moles, 20 moles, 25 moles, 30 moles, 35 moles, or 40 moles or so, and the upper limit thereof may be 100 moles, 95 moles, 90 moles, 85 moles, 80 moles, 75 moles, 70 moles, 65 moles, 60 moles, 55 moles, 50 moles, or 45 moles or so. The numerical value may be within a range of more than or equal to, or more than any of the above-described lower limits; or within a range of less than or equal to, or less than any of the above-described upper limits; or within a range of more than or equal to, or more than any of the above-described lower limits while being less than or equal to, or less than any of the above-described upper limits. As the upper limit or lower limit of the numerical value is an upper limit or lower limit close to the relevant numerical value in an example described herein among the above-listed upper limits or lower limits, the more effectively

the desired effect can occur.

The lower limit of the ratio of the total mole number of the thiophene units (e.g., the first to third units, etc.) and the unit of Formula 8 above in the conductive PTC polymer may be 50 mol%, 55 mol%, 60 mol%, 65 mol%, 70 mol%, 75 mol%, 80 mol%, 85 mol%, or 90 mol% or so, and the upper limit thereof may be 100 mol%, or 95 mol% or so. The ratio is based on the total mole number of all units (monomer units) included in the conductive PTC polymer. The ratio may be within a range of less than or equal to, or less than any of the above-described upper limits; or within a range of more than or equal to, or more than any of the above-described lower limits; or may also have a range of more than or equal to, or more than any of the above-described lower limits while being less than or equal to, or less than any of the above-described upper limits. As the upper limit or lower limit of the numerical value is an upper limit or lower limit close to the relevant numerical value in an example described in this specification among the above-listed upper limits or lower limits, the more effectively the desired effect can occur.

The conductive PTC polymer may also further comprise other monomer units within a range without impairing the desired effect, for example, the PTC effect and/or the oxidation potential.

The polymer composition may comprise the conductive PTC polymer, and accordingly, it may exhibit the above-described characteristics.

The lower limit of the content of the conductive PTC polymer in the polymer composition, or the polymer layer to be described below may be 5 wt%, 10 wt%, 15 wt%, 20 wt%, 25 wt%, 30 wt%, 35 wt%, 40 wt%, 45 wt%, 50 wt%, 55 wt%, 60 wt%, 65 wt%, 70 wt%, 75 wt%, 80 wt%, 85 wt%, 90 wt%, or 95 wt% or so, and the upper limit thereof may be 99 wt%, 95 wt%, 90 wt%, 85 wt%, 80 wt%, 75 wt%, 70 wt%, 65 wt%, 60 wt%, 55 wt%, 50 wt%, 45 wt%, or 40 wt% or so. The ratio may be within a range of less than or equal to, or less than any of the above-described upper limits; or within a range of more than or equal to, or more than any of the above-described lower limits; or within a range of more than or equal to, or more than any of the above-described lower limits while being less than or equal to, or less than any of the above-described upper limits. When the polymer composition or polymer layer comprises a solvent, the ratio is a ratio based on the weight of the entire polymer composition or polymer layer excluding the solvent. As the upper limit or lower limit of the numerical value is an upper limit or lower limit close to the relevant numerical value in an example described herein among the above-listed upper limits or lower limits, the more effectively the desired effect can occur.

The polymer composition may further comprise a conductive material.

As the conductive material, a material having appropriate conductivity may be used, and for example, as the conductive material, one, or two or more selected from carbon particles, carbon fibers, graphene, graphite, carbon black, and carbon nanotubes may be used.

As the conductive material, an appropriate type may be selected and used from the above-described types, where the shape of the material may be a particle shape (spherical, irregular, or other shape), a plate shape or a fiber shape, and the like, but is not limited thereto.

The size of the conductive material may also be appropriately adjusted as needed. For example, the lower limit of the average size of the conductive material may be 5 nm, 10 nm, 50 nm, 100 nm, 150 nm, 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, 1,000 nm, 5,000 nm, or 10,000 nm or so, and the upper limit thereof may also be 100,000 nm, 90,000 nm, 80,000 nm, 70,000 nm, 60,000 nm, 50,000 nm, 40,000 nm, 30,000 nm, 20,000 nm, 10,000 nm, 5,000 nm, 1,000 nm, 950 nm, 900 nm, 850 nm, 800 nm, 750 nm, 700 nm, 650 nm, 600 nm, 550 nm, 500 nm, 450 nm, 400 nm, 350 nm, 300 nm, 250 nm, 200 nm, 200 nm or 150 nm, 100 nm, 90 nm, 80 nm, 70 nm, or 65 nm or so. The average size may be within a range of less than or equal to, or less than any of the above-described upper limits; or within a range of more than or equal to, or more than any of the above-described lower limits; or within a range of more than or equal to, or more than any of the above-described lower limits while being less than or equal to, or less than any of the above-described upper limits. As the upper limit or lower limit of the numerical value is an upper limit or lower limit to the relevant numerical value in an example described herein among the above-listed upper limits or lower limits, the more effectively the desired effect can occur. When the conductive material is not spherical, the average size is the average particle diameter corresponding to the particle diameter of a sphere with the same volume as the volume of the relevant conductive material, and the measurement method thereof is described in "7. Average particle diameter" of Examples of this specification.

When the conductive material is fibrous, the lower limit of the aspect ratio (length/cross-sectional diameter) may be 5, 10, 15, 20, 25, 30, 35, 40, 45, 50, 55, 60, or 65 or so, and the upper limit thereof may be 200, 195, 190, 185, 180, 175, 170, 165, 160, 155, 150, 145, 140, 135, 130, 125, 120, 115, 110, 105, 100, 95, 90, 85, 80, 75, or 70 or so. The aspect ratio may be within a range of less than or equal to, or less than any of the above-described upper limits; or within a range of more than or equal to, or more than any of the above-described lower limits; or within a range of more than or equal to, or more than any of the above-described lower limits while being less than or equal to, or less than any of the above-described upper limits.

In one example, carbon particles having an average size in the range may be used as the conductive material. In this case, the conductive material may have a sufficient surface area within the polymer composition, thereby contributing to improving the electrical reactivity of the conductive PTC polymer layer manufactured from the polymer composition, and

contributing to exhibiting a high PTC effect at a fast rate.

The lower limit of the content of the conductive material in the polymer composition or polymer layer relative to 100 parts by weight of the conductive PTC polymer composition may be 1 part by weight, 5 parts by weight, 6 parts by weight, 7 parts by weight, 8 parts by weight, 9 parts by weight, 10 parts by weight, 11 parts by weight, 12 parts by weight, 13 parts by weight, 14 parts by weight, 15 parts by weight, 16 parts by weight, 17 parts by weight, 18 parts by weight, 19 parts by weight, 20 parts by weight, 50 parts by weight, 55 parts by weight, 60 parts by weight, 80 parts by weight, 100 parts by weight, 120 parts by weight, 140 parts by weight, or 150 parts by weight or so, and the upper limit thereof may be 1,000 parts by weight, 950 parts by weight, 900 parts by weight, 850 parts by weight, 800 parts by weight, 750 parts by weight, 700 parts by weight, 650 parts by weight, 600 parts by weight, 550 parts by weight, 500 parts by weight, 450 parts by weight, 400 parts by weight, 350 parts by weight, 300 parts by weight, 250 parts by weight, 200 parts by weight, 150 parts by weight, 100 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, 30 parts by weight, 28 parts by weight, 26 parts by weight, 24 parts by weight, 22 parts by weight, or 20 parts by weight or so. The content may be within a range of less than or equal to, or less than any of the above-described upper limits; or within a range of more than or equal to, or more than any of the above-described lower limits; or within a range of more than or equal to, or more than any of the above-described lower limits while being less than or equal to, or less than any of the above-described upper limits. As the upper limit or lower limit of the numerical value is an upper limit or lower limit close to the relevant numerical value in an example described herein among the above-listed upper limits or lower limits, the more effectively the desired effect can occur.

Under such a ratio, the conductive material may appropriately interact with the conductive PTC polymer, thereby enabling a polymer layer of a desired shape to be effectively formed. As the polymer composition comprises the conductive material together with the conductive PTC polymer, the PTC effect of the PTC polymer can be further enhanced. When the polymer composition comprises the conductive material in the range, the PTC effect, and the effect of improving the rate of electrical reactivity can be exhibited. In addition, even when the content of the conductive material increases, the PTC effect due to the conductive PTC polymer can be maintained. Therefore, the present application can provide a polymer composition in which the PTC effect is maintained while the electrical reactivity is improved.

The present specification also discloses a polymer layer. The term polymer layer means a layer including a polymer. The polymer layer may comprise a conductive PTC polymer and a conductive material. In this instance, the specific contents of the conductive PTC polymer and the conductive material are as described in the polymer composition, and the ratio of the conductive PTC polymer and the conductive material in the polymer layer, or the like is the same as the ratio of the conductive PTC polymer and the conductive material in the polymer composition.

In one example, the polymer layer may be a layer formed from the above-described polymer composition.

The polymer layer comprises the PTC polymer and the conductive material simultaneously, whereby the PTC effect and the effect having excellent electrical reactivity may appear. Through this, the polymer layer and/or the electronic/electric device applying the same, which is described below, can have excellent electrical characteristics in a normal state, and secure stability through a rapid increase in resistance in an abnormal state. In addition, the PTC effect can be stably expressed even when the polymer layer and/or the electronic/electric device applying the same operates under high output conditions.

The polymer layer can exhibit the Q value of Equation 1 as described above, $R_1$ and/or $R_2$ of Equation 1 above, R value of Equation 2 above, and $R_{25}$ and/or $R_{130}$ of Equation 2 above.

The thickness of the polymer layer may be appropriately controlled depending on the purpose. For example, the lower limit of the thickness may be 10 nm, 50 nm, 100 nm, 150 nm, 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, or 1000 nm or so, and the upper limit thereof may be 2 $\mu$m, 1.5 $\mu$m, 1 $\mu$m, 950 nm, 900 nm, 850 nm, 800 nm, 750 nm, 700 nm, 650 nm, 600 nm, 550 nm, 500 nm, 450 nm, 400 nm, 350 nm, or 300 nm or so. The thickness may be within a range of less than or equal to, or less than any of the above-described upper limits; or within a range of more than or equal to, or more than any of the above-described lower limits; or within a range of more than or equal to, or more than any of the above-described lower limits while being less than or equal to, or less than any of the above-described upper limits. As the upper limit or lower limit of the numerical value is an upper limit or lower limit close to the relevant numerical value in an example described herein among the above-listed upper limits or lower limits, the more effectively the desired effect can occur.

The polymer layer can exhibit appropriate surface characteristics, and can exhibit the desired electrical reactivity and PTC effect in the thickness range, by exhibiting the characteristics as described above.

The present specification also discloses a method for producing the polymer layer. For example, the polymer layer may be formed by coating the above-described polymer composition using an appropriate means and, if necessary, performing a heat treatment or aging process at an appropriate temperature.

The method for preparing and coating the polymer composition for forming the polymer layer is not particularly limited, and a known mixing method or coating method may be applied. In addition, the conductive PTC polymer may also be synthesized by a known method. For example, as a method for producing polythiophene, a method using an oxidation polymerization reaction or a method using a radical reaction is representatively known, and such a method may also be

applied to the process of forming the conductive PTC polymer.

The present specification also discloses a current collector comprising the polymer layer. For example, the current collector may comprise a current collector body; and the polymer layer formed on the current collector body. The polymer layer may exist in contact with the current collector body.

As the current collector body, a current collector body that is commonly used for a positive electrode or a negative electrode may be used without any special limitation.

If the current collector body has conductivity without causing chemical changes in an application device such as a secondary battery, its type, size, and shape, and the like are not particularly limited. An example of a material which is usable as the current collector body may include copper, aluminum, stainless steel, nickel, titanium, or calcined carbon, and the like, or may be exemplified by a material or the like in which the surface of copper, aluminum or stainless steel is surface-treated with carbon, nickel, titanium, or silver, and the like. The current collector body may be in the form of a film, sheet, foil, net, porous body, foam, or nonwoven fabric containing the material. In some cases, known surface treatment may also be performed on the surface of the current collector body for improvement of the adhesion force to other layers such as a polymer layer or an active material layer.

Such a current collector body may typically have a thickness in a range of 1 μm to 1,000 μm, but is not limited thereto.

The present specification also discloses an electrode comprising the current collector.

The electrode may comprise an active material layer formed on the polymer layer of the current collector. Such an electrode may be a negative electrode (anode) or a positive electrode (cathode) applied to a secondary battery.

For example, the electrode may comprise the current collector and an active material layer formed on the polymer layer of the current collector. Figure 2 is a diagram showing an electrode in which an active material layer (300) is formed on the polymer layer (200) of an electrode current collector comprising the current collector body (100) and the polymer layer (200).

As in the diagram, in the electrode current collector or the electrode, the current collector body (100) and the polymer layer (200), and the polymer layer (200) and the active material layer (300) may also be in contact with each other, and other elements may exist therebetween. In addition, a case where the active material layer (300) exists only on one side of the current collector body (100) is illustrated in the diagram, but the active material layer

(300) may also exist on both sides of the current collector body (100). In this case, the polymer layer (200) may also exist in two layers between each of the active material layers (300) existing on both sides of the current collector body (100) and the current collector body (100), and may also exist in one layer between any one of the active material layers (300) existing on both sides and the current collector body (100).

A commonly applied layer may be used as the active material layer. Typically, the active material layer comprises an electrode active material. The specific type of the electrode active material is not particularly limited, and typically, a material forming the positive electrode or negative electrode may be used.

The active material layer may further comprise a binder. The binder plays a role in improving attachment between active materials and the adhesion force between the active material layer and the current collector body. An example of the binder is not particularly limited.

In the electrode, the polymer layer may be applied as a layer capable of variably controlling charge migration through the electrode depending on the temperature.

The present specification also discloses an electrode assembly or an electronic/electric device (e.g., secondary battery) comprising the electrode.

The electronic/electric device may comprise the electrode as a positive electrode and/or a negative electrode. If the electrode is used as a negative electrode and/or a positive electrode, other constitutions or manufacturing methods of the electronic/electric device are not particularly limited, and known methods may be applied.

## Advantageous Effects

The present specification discloses a polymer composition. The polymer composition can form a polymer layer exhibiting a PTC (positive temperature coefficient) effect, and the PTC effect of the polymer layer can be very precisely controlled in response to a temperature and an external voltage. The polymer layer can very quickly exhibit at a necessary time a transition between a state exhibiting excellent electrical properties such as very low resistance and a state exhibiting insulator properties due to the increased resistance.

Accordingly, the polymer layer is applied to various electronic/electric devices, so that in a normal state, it does not affect driving of the devices through excellent electrical properties, and in an abnormal state, it is possible to ensure stability through the rapid resistance increase.

For example, the polymer layer is applied to a secondary battery to be converted into an insulator in an abnormal state, thereby suppressing additional current flow, whereby it is possible to secure excellent stability against risks caused by TR and TP, and the like.

The present specification also discloses the polymer layer, and a current collector and a secondary battery, each comprising the same.

## Description of Drawings

Figure 1 is an NMR analysis result for a monomer of Production Example 1.
Figure 2 is an exemplary cross-sectional diagram of an electrode of the present application.

## Mode for Invention

Hereinafter, polymer compositions, and the like disclosed in the present specification will be specifically described through examples and comparative examples, but the scope of the polymer compositions, and the like is not limited by the following examples.

### 1. NMR analysis method

$^1$H-NMR analyses were performed at room temperature (about 25°C) using an NMR spectrometer including a Bruker UltraShield spectrometer (300 MHz) with a 5 mm triple resonance probe. A sample was diluted in a solvent ($CDCl_3$) for NMR measurement to a concentration of about 10 mg/ml or so, the NMR analysis was performed, and the chemical shift was expressed in ppm.

### 2. GPC (Gel Permeation Chromatograph)

Molecular weight characteristics were measured using GPC (Gel permeation chromatography). A sample was placed in a 5 mL vial and diluted with chloroform to a concentration of about 1 mg/mL or so. Thereafter, the standard sample for calibration and the sample to be analyzed were filtered through a syringe filter (pore size: 0.45 μm), and then measured. As the analysis program, Waters' Empower 3 was used, and a weight average molecular weight (Mw) and a number average molecular weight (Mn) were each obtained by comparing the elution time of the sample with the calibration curve, and the molecular weight distribution (PDI) was calculated by the ratio (Mw/Mn). The measurement conditions of GPC are as follows.

<GPC measurement conditions>

Instrument: Waters' 2414
Column: using 3 Styragels from Waters
Solvent: THF (tetrahydrofuran)
Column temperature: 35°C
Sample concentration: 1mg/mL, 1μL injection
Standard sample: polystyrene (Mp: 3900000, 723000, 316500, 52200, 31400, 7200, 3940, 485)

### 3. Thickness measurement

The thickness of the polymer layer, and the like was measured by cross-sectioning an electrode using an ion milling device (Hitachi, IM5000), and then photographing a SEM (Scanning Electron Microscope) (JEOL, JSM-7200F) image of the cross-section.

### 4. Reactivity measurement

The reactivity of the polymer layer can be represented by the Q value of Equation 1 below.

[Equation 1]

$$Q = R_1/R_2$$

In Equation 1, $R_1$ is the AC impedance resistance of the polymer layer as measured by the EIS measurement method at room temperature (about 25°C) in a state where a voltage of 3V is applied for 10 minutes.

In Equation 1, $R_2$ is the AC impedance resistance of the polymer layer as measured by the EIS measurement method after a voltage is converted to 3.3V in a state where a voltage of 3V is applied at room temperature (about 25°C) for 10 minutes, and then 1 second has elapsed.

A specimen (coin cell) for measuring $R_1$ and $R_2$ of Equation 1 is manufactured in the following manner.

A polymer layer is formed on an aluminum foil (Al foil) with a thickness of about 15 $\mu$m or so using each of the polymer compositions of Examples 1 to 7 and Comparative Example 1. The formation method and thickness of the polymer layer, and the like are the same as those described in each of Examples and Comparative Examples. Subsequently, a separator and a lithium film are laminated on the polymer layer to manufacture a laminate (aluminum foil/polymer layer/separator/lithium film). The laminate is punched into a circle with a diameter of about 1.4 cm or so, and a coin cell is manufactured using the laminate punched into the circle and an electrolyte. The coin cell is manufactured using the Welcos CR2032 coin cell kit, and in this process, as the separator, W-Scope Korea's WL20C model is used, and as the lithium film, a lithium film with a thickness of about 100 $\mu$m or so is used. In addition, as the electrolyte, a 1M $LiPF_6$ solution (solvent: EC/DMC/EMC=3/4/3 (mass ratio), EC: ethylene carbonate, DMC: dimethyl carbonate, EMC: ethylmethyl carbonate), which is Enchem's product, is used.

(1) Measurement of $R_1$ in Equation 1

The AC impedance resistance of the coin cell is measured through EIS (Electrochemical Impedance Spectronization, impedance spectroscopy). A voltage of 3V is applied to the coin cell at room temperature (about 25°C) for 10 minutes, and an interface resistance obtained in a high frequency region of a Nyquist plot obtained by the EIS measurement method at 50,000 Hz to 0.1 Hz is measured, and this interface resistance is used as the $R_1$ value of Equation 1. An electrochemical measuring instrument (potentiostat) (Princeton Applied Research, PARASTAT-MC) can be used as the EIS measurement instrument.

(2) Measurement of $R_2$ in Equation 1

The external voltage applied to the coin cell whose AC impedance has been measured in a state where the external voltage of 3V has been applied for measurement of $R_1$, is converted to 3.3V, and after 1 second, the AC impedance resistance is measured in the same manner as the measurement of $R_1$, which is used as $R_2$ in Equation 1.

**5. AC impedance resistance measurement**

(1) Measurement of room-temperature (about 25°C) AC impedance resistance ($R_{25}$)

The AC impedance resistance is measured using the same specimen (coin cell) used in the "4. Reactivity measurement." The AC impedance resistance is measured for the coin cell using the EIS (Electrochemical Impedance Spectronization, impedance spectroscopy) measurement method. An interface resistance obtained in a high frequency region of a Nyquist plot obtained by the EIS measurement method in the range of 50,000 Hz to 0.1 Hz is measured. An electrochemical measuring instrument (potentiostat) (Princeton Applied Research, PARASTAT-MC) is used as the EIS measurement instrument.

A voltage of 4.5V is applied to the coin cell (specimen) at room temperature (about 25°C) for 10 minutes to maintain a doping state of the conductive polymer, and the AC impedance resistance is measured after about 1 minute in a state where the external voltage has set to 0V (open circuit voltage). The measurement value is used as the AC impedance resistance value ($R_{25}$) of the polymer layer at room temperature (about 25°C).

(2) Measurement of 130°C impedance resistance ($R_{130}$)

The coin cell (specimen) is placed in the center of an oven (convection oven) (Jeotech, OF3-05W), and the coin cell (specimen) is connected to an electrochemical measuring instrument (potentiostat) (Princeton Applied Research, PARASTAT-MC) outside the oven to enable EIS resistance measurement. While maintaining the room temperature (about 25°C) in the above state, a voltage of 4.5V is applied to the coin cell (specimen) for 10 minutes to maintain a doping state of the conductive polymer, and the final temperature of the oven is set to 130°C. When the temperature reaches 130°C, the AC impedance resistance is measured after about 1 minute in a state where the external voltage has set to 0V (open circuit voltage). The measured value is used as $R_{130}$, which is the AC impedance resistance value of the polymer layer at 130°C.

## 6. Oxidation potential measurement method

The oxidation potential was measured in the following manner. A polymer layer is formed on an aluminum foil (Al foil) having a thickness of about 15 μm. The polymer layer is formed using a polymer solution. The polymer solution for measuring an oxidation potential of a conductive PTC polymer is prepared by dispersing the conductive PTC polymer in a solvent (toluene) at a concentration of about 2.0 wt% or so. In addition, as the polymer solution for measuring an oxidation potential of a polymer composition, each of the polymer compositions prepared in Examples 1 to 7 and Comparative Example 1 is used as the polymer solution. A method of forming a polymer layer using the polymer solution is the same as in Example 1. The thickness of the polymer layer was the same as in each of Examples and Comparative Example, and the thickness of the polymer layer for measuring the oxidation potential of the conductive PTC polymer was set to about 500 nm.

Subsequently, a separator and a lithium film are laminated on the polymer layer to manufacture a laminate (aluminum foil/polymer layer/separator/lithium film), and the laminate is punched into a circle with a diameter of about 1.4 cm or so. Subsequently, a coin cell is manufactured using the laminate punched into the circle, and an electrolyte. The coin cell is manufactured using Welcos CR2032 coin cell kit.

Here, W-Scope Korea's WL20C model was used as the separator, a lithium film with a thickness of about 100 μm or so was used as the lithium film, and a 1M $LiPF_6$ solution (solvent: EC/DMC/EMC=3/4/3 (mass ratio), EC: ethylene carbonate, DMC: dimethyl carbonate, EMC: ethylmethyl carbonate) from Enchem was used as the electrolyte.

Using the coin cell above, the oxidation potential is measured at room temperature (about 25°C) with an electrochemical measuring instrument (potentiostat) (Princeton Applied Research, PARASTAT-MC). The oxidation potential based on lithium and lithium ions ($Li/Li^+$) is measured by measuring CV (cyclic voltammetry) at a scan rate of 0.17 mV/sec to 0.5 mV/sec in the range of 1.5V to 5.5V.

## 7. Average particle diameter

The average particle diameter (D50 particle diameter) of a conductive material (carbon nano particle, CNP) is measured using Marvern's MASTERSIZER3000 device in accordance with ISO-13320 standard. Water is used as a measurement solvent. When the conductive material is dispersed in the solvent and irradiated with a laser, the laser is scattered by the conductive material dispersed in the solvent, and intensity and directionality values of the scattered laser vary depending on the size of the particle, so that the average particle size can be obtained by analyzing this using the Mie theory. Through the analysis, the volume-based cumulative graph of the particle size distribution is obtained by conversion into the particle diameter of a sphere having the same volume as the dispersed conductive material, and the particle diameter (median particle size) at 50% of the cumulative graph is designated as the average particle size (D50 particle diameter).

## Production Example 1. Synthesis of monomer (A)

A monomer of Formula A below was synthesized in the following manner.

[Formula A]

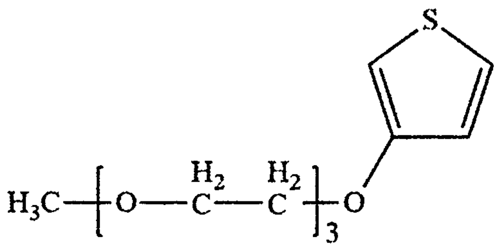

In 100 ml of toluene, 1.372 g (12.02 mmol, 1eq) of 3-methoxythiophene and 3 g (16.83 mmol, 1.4eq) of triethylene glycol monomethyl ether were dissolved together with 230 mg of p-toluenesulfonic acid (p-TsOH), and mixed. While the mixture was refluxed at 120°C to react, methanol generated by the reaction (transetherification) was removed by 4A type molecular sieves filled in an extractor (soxhlet extractor). The reactant was refluxed for 24 hours, and then quenched with water, and extracted with ethyl acetate, and then washed with brine, and dried over magnesium sulfate ($MgSO_4$). The solvent was removed using a rotary evaporator, and the residue was purified by column chromatography eluting with methylene chloride/hexane (2:1) to obtain the target compound (monomer (A)). The NMR analysis results for the target compound (monomer (A)) are as shown in Figure 1.

**Production Example 2. Synthesis of conductive PTC polymer (B)**

3-dodecylthiophene (3-DT), 3-hexylthiophene (3-HT), and the monomer (A) of Formula A in Production Example 1 and pyrrole were polymerized to produce a conductive PTC polymer.

To a solution in which 3.20 g (19.71 mmol, 3eq) of iron (III) chloride was dissolved in 150 ml of methylene chloride, 0.7 g (2.96 mmol, 0.6 eq) of 3-dodecylthiophene, 0.3 g (1.48 mmol, 0.3 eq) of 3-hexylthiophene, 0.12 g (0.49 mmol, 0.1 eq) of the monomer (A) of Production Example 1, and 0.37 g (1.23 mmol, 0.3 eq) of pyrrole were introduced, and polymerized at 25°C for 24 hours to produce a conductive PTC polymer (B). The polymerization solution was placed in an osmosis membrane with an MWCO (molecular weight of cut-off) of 5000, and then immersed in 200ml of an acetonitrile solvent to remove unreacted iron (III) chloride and monomers. The residue precipitated inside the osmosis membrane was washed with methanol, and dried at 60°C for 12 hours to obtain a conductive PTC polymer (B). The weight-average molecular weight (Mw) and number-average molecular weight (Mn) of the conductive PTC polymer (B) were 99,000 g/mol and 28,000 g/mol, respectively.

In the conductive PTC polymer (B), the molar ratio (I: II: III: IV) of the 3-dodecylthiophene unit (I), the 3-hexylthiophene unit (II), the monomer (A) unit (III) in Production Example 1, and the pyrrole unit (IV) was about 2.96:1.48:0.49:1.23 or so, and the oxidation potential based on lithium and lithium ions ($Li/Li^+$) was about 3.55 V or so.

**Example 1.**

A polymer composition was prepared by dispersing a mixture prepared by mixing the conductive PTC polymer (B) of Production Example 2 and carbon nano particles (CNP) in a weight ratio (B: CNP) of 9.5:0.5 in toluene at a concentration of about 4 wt%. As the carbon nano particles, Imerys' product (Super C, D50 particle diameter: about 60 nm) was used. When preparing the polymer composition, the mixture was dispersed at about 30°C for about 4 hours using an ultrasonic disperser. The coating solution prepared by the above method was coated on a current collector using a bar coating method (#8 Mayer bar), and maintained in a drying oven at about 140°C for about 4 minutes, and then maintained again at 130°C for about 60 minutes to form a layer (polymer layer) with a thickness of about 500 nm. As the current collector, an Al foil with a thickness of about 15 μm or so was used.

**Example 2.**

A polymer composition and a polymer layer were formed in the same manner as in Example 1, except that the weight ratio (B: CNP) of the conductive PTC polymer (B) of Production Example 2 and carbon nanoparticles (CNP) was changed to 8:2.

**Example 3.**

A polymer composition and a polymer layer were formed in the same manner as in Example 1, except that the weight ratio (B: CNP) of the conductive PTC polymer (B) of Production Example 2 and carbon nanoparticles (CNP) was changed to 6:4.

**Example 4.**

A polymer composition and a polymer layer were formed in the same manner as in Example 1, except that the weight ratio (B: CNP) of the conductive PTC polymer (B) of Production Example 2 and carbon nanoparticles (CNP) was changed to 4:6.

**Example 5.**

A polymer layer was formed in the same manner as in Example 2, except that the thickness of the polymer layer was set to about 100 nm or so.

**Example 6.**

A polymer layer was formed in the same manner as in Example 2, except that the thickness of the polymer layer was set to about 700 nm or so.

**Example 7.**

A polymer layer was formed in the same manner as in Example 2, except that the thickness of the polymer layer was set to about 1,000 nm or so.

**Comparative Example 1.**

A polymer composition was prepared using only the conductive PTC polymer (B) of Production Example 2 without adding carbon nanoparticles (CNP), and a polymer layer was formed in the same manner as in Example 1 using the same.

The measurement results for the polymer layers were described in Table 1 below. In Table 1, the unit of oxidation potential is V, and the unit of impedance is Ω.

[Table 1]

| | Oxidation potential | Thickness (nm) | AC impedance (3V) | AC impedance (3.3V) | 25°C Impedance | 130°C Impedance |
|---|---|---|---|---|---|---|
| Example 1 | 3.33 | 500 | 35,000 | 5,000 | 50 | 35000 |
| Example 2 | 3.29 | 500 | 34,000 | 350 | 42 | 30000 |
| Example 3 | 3.27 | 500 | 38,000 | 300 | 35 | 33000 |
| Example 4 | 3.27 | 500 | 40,000 | 300 | 30 | 34000 |
| Example 5 | 3.29 | 100 | 35,000 | 350 | 45 | 35000 |
| Example 6 | 3.28 | 700 | 37,000 | 400 | 50 | 33000 |
| Example 7 | 3.29 | 1000 | 33,000 | 500 | 53 | 34000 |
| Comparative Example 1 | 3.55 | 500 | 40,000 | 35,000 | 800 | 40000 |

From Table 1, it can be confirmed that the polymer layers of Examples exhibit an appropriate PTC effect and exhibit fast reactivity. In Table 1, the AC impedance (3V) corresponds to $R_1$ in Equation 1, and the AC impedance (3.3V) corresponds to $R_2$ in Equation 1. The matter that the $R_1$ value is higher than the $R_2$ value means that under the measurement conditions of $R_1$, the doping of the conductive polymer in the polymer layer is not significant, but under the measurement conditions of $R_2$, the doping of the conductive polymer occurs rapidly. Therefore, it means that the larger the value of $R_1/R_2$, the faster the doping of the conductive polymer occurs in a short period of time. Looking at the results in Table 1, it can be known that the reactivity of the polymer layer is further improved as the content of the conductive material increases, and it can be known that under the same content of the conductive material, the reactivity of the polymer layer is also affected by the thickness of the polymer layer. In addition, it means that the higher the ratio of the 130°C impedance ($R_{130}$ in Equation 2) to the 25°C impedance ($R_{25}$ in Equation 2) in Table 1, the greater the PTC effect of the polymer layer is expressed.

Particularly, looking at the results of Examples 1 to 4, it can be known that the content of the conductive material increases, whereby the 25°C impedance is maintained very low, and the most excellent PTC effect is expressed in Example 4, in which the conductive material has the highest content even in a state of excellent reactivity. It can be known from such results that an excellent effect can be obtained through the combination of the unique conductive polymer and conductive material.

Such results suggest that the polymer composition disclosed in this specification and the polymer layer formed by the relevant composition are applied to electronic/electric devices such as secondary batteries, whereby in the normal state, the electrical performance of the device is maintained stably and excellently, and in the abnormal state, it is quickly converted to an insulator, and thus they can greatly contribute to securing stability. In addition, the results suggest that the effect can be stably expressed even when the electronic/electric device operates under high-output conditions.

## Claims

**1.** A polymer composition comprising:

a conductive PTC polymer; and

a conductive material, and having
an oxidation potential in a range of 0.1V to 4V.

2. The polymer composition according to claim 1, wherein Q of Equation 1 below is 5 or more:

[Equation 1]

$$Q = R_1/R_2$$

wherein, $R_1$ is an AC impedance resistance of the polymer composition as measured after a voltage of 3V is applied at 25°C for 10 minutes, and $R_2$ is an AC impedance resistance of the polymer composition at the time point when one second has elapsed after a voltage of 3V is applied at 25°C and then the voltage is converted to 3.3V.

3. The polymer composition according to claim 1 or 2, wherein R of Equation 2 below is 20 or more:

[Equation 2]

$$R = R_{130}/R_{25}$$

wherein, $R_{25}$ is an AC impedance resistance of the polymer composition at 25°C, and $R_{130}$ is an AC impedance resistance of the polymer composition at 130°C.

4. The polymer composition according to any one of claims 1 to 3, wherein the conductive PTC polymer comprises a unit having a long-chain hydrocarbon group with 10 or more carbon atoms.

5. The polymer composition according to claim 4, wherein a ratio of the mole number of the unit having the long-chain hydrocarbon group with 10 or more carbon atoms based on the mole number of all units of the conductive PTC polymer is in a range of 20 to 80 mol%.

6. The polymer composition according to claim 4, wherein the conductive PTC polymer further comprises a unit having a short-chain hydrocarbon group with 9 or less carbon atoms.

7. The polymer composition according to claim 6, wherein the unit having the short-chain hydrocarbon group is present in a mole number within a range of 1 mole to 100 moles per 100 moles of the unit having the long-chain hydrocarbon group in the conductive PTC polymer.

8. The polymer composition according to claim 4, wherein the conductive PTC polymer further comprises a unit having a functional group of Formula 5 below:

[Formula 5]

$$-L_7-O-\left[L_8-O\right]_n-R_{13}$$

wherein, $L_7$ is a single bond, an alkylene group or an alkylidene group, $L_8$ is an alkylene group or an alkylidene group, $R_{13}$ is hydrogen or an alkyl group, and n is a number in a range of 1 to 10.

9. The polymer composition according to claim 8, wherein the unit having the functional group of Formula 5 is present in a mole number within a range of 0.01 moles to 60 moles per 100 moles of the unit having the long-chain hydrocarbon group in the conductive PTC polymer.

10. The polymer composition according to claim 4, wherein the conductive PTC polymer further comprises a unit of Formula 8 below:

[Formula 8]

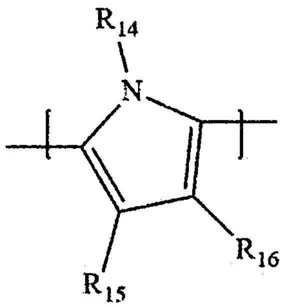

wherein, $R_{14}$, $R_{15}$, and $R_{16}$ are each independently hydrogen, a polar functional group, or a hydrocarbon group.

**11.** The polymer composition according to claim 10, wherein the unit of Formula 8 is present in a mole number within a range of 1 mole to 100 moles per 100 moles of the unit having the long-chain hydrocarbon group in the conductive PTC polymer.

**12.** The polymer composition according to any one of claims 1 to 11, wherein the conductive material is one or more selected from the group consisting of carbon particles, carbon fibers, graphene, graphite, carbon black, and carbon nanotubes.

**13.** The polymer composition according to any one of claims 1 to 12, wherein the conductive material has an average size in a range of 5 nm to 100,000 nm.

**14.** A polymer layer formed from the polymer composition of any one of claims 1 to 13.

**15.** A polymer layer comprising:

a conductive PTC polymer; and
a conductive material, and having
an oxidation potential in a range of 0.1V to 4V.

**16.** The polymer layer according to claim 15, wherein Q of Equation 1 below is 5 or more:

[Equation 1]

$$Q = R_1/R_2$$

wherein, $R_1$ is an AC impedance resistance of the polymer layer as measured after a voltage of 3V is applied at 25°C for 10 minutes, and $R_2$ is an AC impedance resistance of the polymer layer at the time point when one second has elapsed after a voltage of 3V is applied at 25°C and then the voltage is converted to 3.3V.

**17.** The polymer layer according to claim 15 or 16, wherein R of Equation 2 below is 20 or more:

[Equation 2]

$$R = R_{130}/R_{25}$$

wherein, $R_{25}$ is an AC impedance resistance of the polymer layer at 25°C, and $R_{130}$ is an AC impedance resistance of the polymer layer at 130°C.

**18.** A current collector comprising:

a current collector body; and

the polymer layer according to any one of claims 15 to 17, wherein the polymer layer is formed on the current collector body.

**19.** An electrode comprising the current collector of claim 18.

**20.** A secondary battery comprising the electrode of claim 19.

[Figure 1]

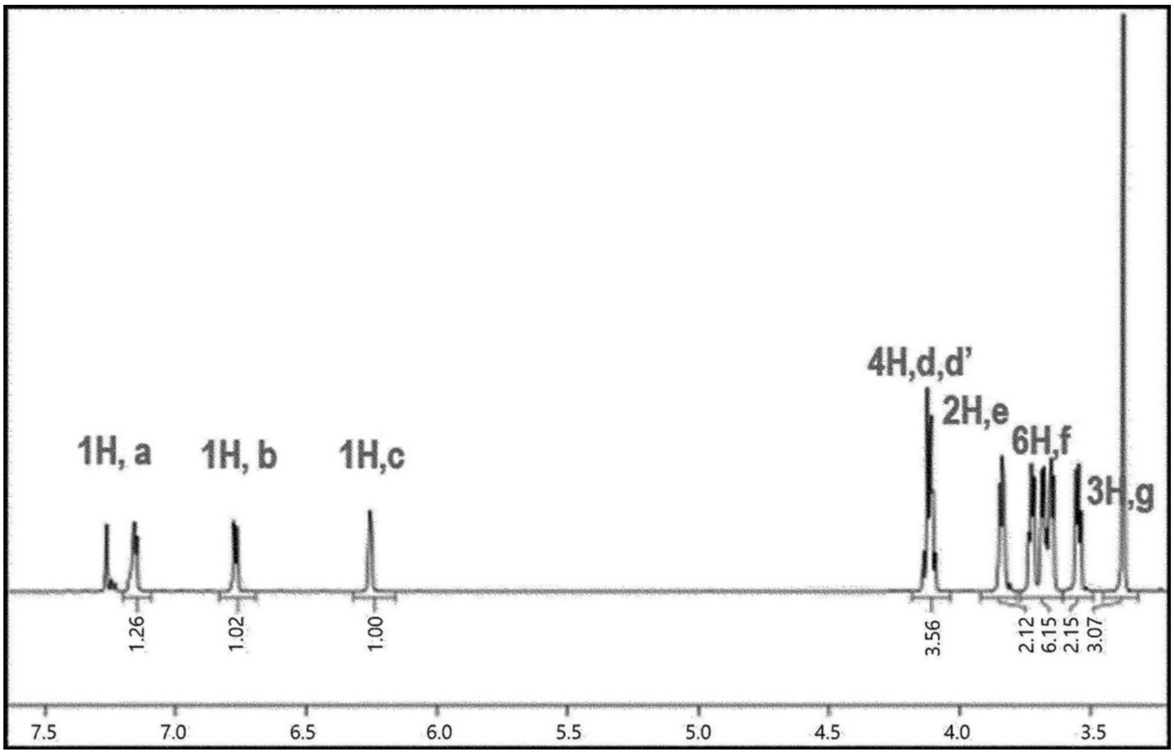


[Figure 2]

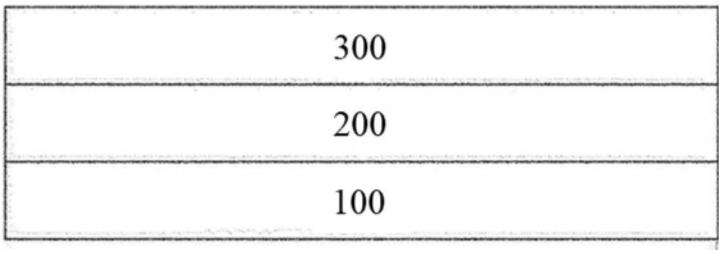

## INTERNATIONAL SEARCH REPORT

International application No.
**PCT/KR2024/007687**

**A. CLASSIFICATION OF SUBJECT MATTER**

**C08K 3/04**(2006.01)i; **C08L 65/00**(2006.01)i; **C08G 61/12**(2006.01)i; **H01M 4/66**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

C08K 3/04(2006.01); H01M 10/052(2010.01); H01M 2/26(2006.01); H01M 4/131(2010.01); H01M 4/134(2010.01); H01M 4/62(2006.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 집전체(collector), 전도성 고분자(conductive polymer), 도전성 물질(conductive material), 티오펜(thiophene), 산화전위(oxidation potential)

**C. DOCUMENTS CONSIDERED TO BE RELEVANT**

| Category* | Citation of document, with indication, where appropriate, of the relevant passages | Relevant to claim No. |
|---|---|---|
| Y | LI, H. et al. Building a thermal shutdown cathode for Li-ion batteries using temperature-responsive poly(3-dodecylthiophene). Energy technology. 2020, vol. 8, thesis no: 2000365, inner pp. 1-9. See inner pages 1 and 8. | 1-3,15-17 |
| Y | KR 10-2022-0043773 A (LG ENERGY SOLUTION, LTD.) 05 April 2022 (2022-04-05) See claims 1, 3-5, 7-9 and 12; and paragraph [0074]. | 1-3,15-17 |
| Y | US 2021-0351413 A1 (GLOBAL GRAPHENE GROUP, INC.) 11 November 2021 (2021-11-11) See claims 1, 5 and 7-14; and paragraphs [0001] and [0092]-[0093]. | 1-3,15-17 |
| A | CN 115513459 A (SUZHOU INSTITUTE OF NANO-TECH AND NANO-BIONICS (SINANO), CHINESE ACADEMY OF SCIENCES) 23 December 2022 (2022-12-23) See claims 1-10. | 1-3,15-17 |
| A | HOSSEINI, S. H. et al. Chemical and electrochemical synthesis of homopolymer and copolymers of 3-methoxyethoxythiophene with aniline, thiophene and pyrrole for studies of their gas and vapour sensing. Polymers for advanced technologies. 2001, vol. 12, pp. 524-534. See abstract; and page 526. | 1-3,15-17 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **23 September 2024** | **24 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2024/007687**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **5-11,19,20**
because they relate to parts of the international application that do not comply with the prescribed requirements to such an extent that no meaningful international search can be carried out, specifically:

Claims 5-11, 19 and 20 refer to claims not meeting the requirement of the PCT Rule 6.4(a), and thus are unclear.

3. ☑ Claims Nos.: **4,12-14,18**
because they are dependent claims and are not drafted in accordance with the second and third sentences of Rule 6.4(a).

**INTERNATIONAL SEARCH REPORT**
**Information on patent family members**

International application No.
**PCT/KR2024/007687**

| Patent document cited in search report | Publication date (day/month/year) | Patent family member(s) | Publication date (day/month/year) |
|---|---|---|---|
| KR 10-2022-0043773 A | 05 April 2022 | CN 116420247 A | 11 July 2023 |
| | | EP 4203094 A1 | 28 June 2023 |
| | | US 2023-0335709 A1 | 19 October 2023 |
| | | WO 2022-071704 A1 | 07 April 2022 |
| US 2021-0351413 A1 | 11 November 2021 | None | |
| CN 115513459 A | 23 December 2022 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230072489